# EUROPÄISCHE PATENTSCHRIFT

(11) **EP 1 199 202 B1**
(45) Veröffentlichungstag und Bekanntmachung des Hinweises auf die Patenterteilung: **14.02.2007**
(21) Anmeldenummer: 01124863.0
(22) Anmeldetag: 18.10.2001
(51) Int. Cl.: B60J 7/20, B62D 25/12

(54) **Cabriolet-Fahrzeug mit einem im rückwärtigen Fahrzeugbereich unterhalb eines Deckelteils ablegbaren Dach**
Convertible vehicle with a roof storable beneath a cover element on the rear part of the vehicle
Véhicule convertible avec une capote escamotable sous un élément de couvercle dans la partie arrière du véhicule

(30) Priorität: 20.10.2000 DE 10051996; 20.10.2000 DE 10052001
(43) Veröffentlichungstag der Anmeldung: 24.04.2002
(73) Patentinhaber: Wilhelm Karmann GmbH, 49084 Osnabrück (DE)
(72) Erfinder: Weissmüller, Olaf, 49565 Bramsche (DE); Heselhaus, Udo, 49479 Ibbenbüren (DE)
(74) Vertreter: Busse & Busse Patentanwälte

(56) Entgegenhaltungen:
- DE-A- 19 946 454
- DE-C- 19 803 155
- US-A- 5 823 606
- PATENT ABSTRACTS OF JAPAN vol. 2000, no. 11, 3. Januar 2001 (2001-01-03) -& JP 2000 211373 A (TAKADA KOGYO KK), 2. August 2000 (2000-08-02)

## Beschreibung

Die Erfindung betrifft ein Cabriolet-Fahrzeug nach dem Oberbegriff des Anspruchs 1 sowie ein Cabriolet-Fahrzeug nach dem Oberbegriff des Anspruchs 8.

Die DE 19756 062 C1 zeigt ein Cabriolet-Fahrzeug mit einem einerseits zur Freigabe einer seinem vorderen Endbereich benachbarten Durchtrittsöffnung für das Dach und andererseits zur Freigabe einer seinem hinteren Endbereich benachbarten Aufnahmeöffnung für Gepäck auf- und zubeweglichen Deckelteil, das in geöffneter Stellung des Daches dieses überdeckt. Das Deckelteil ist mittels eines Hilfsrahmens gehalten, der im Heckbereich der Karosserie angelenkt ist und in seinem in Fahrtrichtung vorderen Endbereich über ein Mehrgelenk mit dem Deckelteil in Verbindung steht. Bei Öffnung des Deckelteils zur Freigabe der Aufnahmeöffnung für Gepäck öffnet des Mehrgelenk, so daß eine Schwenkbewegung des Deckelteils in einem mit der Fahrtrichtung einen stumpfen Winkel einschließenden Öffnungssinn resultiert. Durch die Öffnung des Mehrgelenks findet gleichzeitig eine Aufwärtsbewegung auch des vorderen Endbereichs des Deckelteils bei dieser Öffnungstatt. Bei Öffnung des Deckelteils zur Freigabe der Durchtrittsöffnung für das Dach ist das Mehrgelenk in einem Ausführungsbeispiel in sich über ein Schloß verriegelt. In einem weiteren Ausführungsbeispiel kann die Verriegelung aufgehoben werden, da über einen Kurbeltrieb eine definierte Bewegung des Mehrgelenks möglich ist. Das Mehrgelenk geht dabei während der Öffnung des Daches aus seiner ausgefahrenen in eine eingeschwenkte Stellung über, so daß sich das Deckelteil flacher an den Hilfsrahmen anlegt. Der Hilfsrahmen muß, da bei Öffnung des Deckelteils im letztgenannten Öffnungssinn dieses um ein heckseitiges Scharnier im Bereich der Oberkante der Stoßstange schwenkt, relativ weit hinten angeordnet sei, um ein Verkanten des Deckelteils und des Hilfsrahmens gegeneinander zu vermeiden. Dadurch ist der Anlenkpunkt des Hilfsrahmens an eine ungünstige Stelle zu legen, da dieser Bereich für die Rückleuchten verbleiben sollte.
Aus der gattungsgemäße DE 199 46 454 A ist eine Öffnungs- und Schließvorrichtung für einen Kofferraumdeckel eines Fahrzeuges offenbart, die so ausgebildet ist, daß eine vordere Seite und eine hintere Seite des Kofferraumdeckels geöffnet werden kann. Dazu ist ein Mehrgelenk vorgesehen, das aus zwei Viergelenken besteht, die über ein Gelenk miteinander gekoppelt sind. Ein Gelenkpunkt des dem Deckelteil zugeordneten Viergelenkes ist wahlweise zu verriegeln oder freizugeben. Im Falle der Verriegelung kann der Kofferraumdeckel in der einen Richtung ausschwenken, wohingegen im Falle der Nichtverriegelung eine Ausschwenkung in der entgegengesetzten Schwenkrichtung ermöglicht ist. Das Aufschwenkmaß ist jedoch durch die Abstände der Teile des Viergelenkes vorgegeben. Dieses Mehrgelenk ist auch an einem Hilfsrahmen an der Karosserie befestigt. Um den Kofferraumdeckel für den Durchtritt eines Daches zu öffnen, ist eine hinreichende Durchtrittsöffnung freizugeben. Damit ist auch hier der Hilfsrahmen relativ weit hinten im Kofferraum einer Fahrzeugkarosserie vorzusehen, so daß ähnlich wie bei dem Fahrzeug nach der DIE 197 56 062 C1 der Anlenkpunkt des Hilfsrahmens an einer ungünstigen Stelle an der Karosserie gelegen ist.
Aus der DE 198 03 155 C ist ein Cabriolet-Fahrzeug mit einer wenigstens ein Dachteil und ein Rückfensterteil aufweisenden Dachkonstruktion bekannt, die in einer Öffnungsstellung im Heckbereich des Fahrzeuges unter einem Heckdeckel wenigstens teilweise in einem Kofferraum ablegbar ist. Der Heckdeckel ist für eine den Kofferraum nach hinten freigebende Öffnungsseite jeweils über ein Führungsgestänge mit einer ersten vorderen Schwenkachse an seitlichen Hilfsrahmen angelenkt. Die beiden seitlichen Hilfsrahmen sind karosserieseitig im unteren Heckbereich des Fahrzeugs hinter der ersten Schwenkachse jeweils durch einen Zusatzlenker, der über einen Drehpunkt mit dem dazu gehörigen Hilfsrahmen verbunden ist, abgestützt. Die Hilfsrahmen sind über Verriegelungsmittel an der Fahrzeugkarosserie festzulegen. Über eine zweite hintere Schwenkachse ist der Heckdeckel im Heckbereich mit der Fahrzeugkarosserie verbunden. Auch die zweite Schwenkachse ist mit einer Verriegelungseinrichtung für den Heckdeckel versehen. Zum Öffnen des Deckels zum Ablegen eines Daches ist der Deckel über Hubzylinder und zwei Gelenkstangen, von denen sich eine am Deckel und die andere an dem Hilfsrahmen abstützt, anzuheben. Um eine hinreichend große Durchtrittsöffnung darstellen zu können, haben die Gestängeteile ein entsprechendes Längenmaß aufzuweisen, so daß sich diese im Kofferraum auch nur unter erschwerten Bedingungen sich unterbringen lassen.

Der Erfindung liegt das Problem zugrunde, ein Cabriolet-Fahrzeug hinsichtlich der Öffnungskinematik des Deckelteils zu verbessern.

Die Erfindung löst dieses Problem durch ein Cabriolet-Fahrzeug mit den Merkmalen des Anspruchs 1. Vorteilhafte Ausgestaltungen sind in den Unteransprüchen 2 bis 16 angegeben.

Mit der Aufstellung bzw. Öffnung des Mehrgelenks bei Öffnung des Deckelteils zur Freigabe der Durchtrittsöffnung für das Dach wird während dieser Öffnung der Vertikalabstand zwischen dem Hilfsrahmen und dem Deckelteil vergrößert. Damit kann ein kurzer seitlicher Arm des Hilfsrahmens ausgebildet werden, der durch die Aufstellung des Mehrgelenks in im Wesentlichen vertikale Richtung verlängert wird, wenn die Durchtrittsöffnung für das Dach freigegeben wird. Aufgrund der Kürze des seitlichen Arms des Hilfsrahmens kann dessen Legerung vom Heckbereich nach vorne verlagert werden. Damit wird der Raum für die Rückleuchten nicht eingeengt. Ihre Zugänglichkeit bleibt ebenso wie der Kofferraum in diesem Bereich voll erhalten.

Wenn das Mehrgelenk zumindest zwei gekoppelte Teilgelenke umfaßt, von denen eines dem Hilfsrahmen und eines dem Deckelteil zugeordnet ist, können diese sich durch Bewegung des Hilfsrahmens gegenseitig beeinflussen und bei Öffnung des Deckelteils zur Freigabe der Durchtrittsöffnung für das Dach Insgesamt in eine Aufsteilbewegung überführt werden, wobei das untere Teilgelenk durch die angetriebene Bewegung des Hilfsrahmens über das Koppelteil die Aufstellung des oberen Teilgelenks bewirkt. Es ergibt sich eine definierte Aufstellbewegung des oberen Teilgelenks, die ohne weitere Antriebs- oder Führungshilfen auskommt.

Bei Verbindung der Teilgelenke miteinander über einen Koppelkörper, der außerhalb seiner Verblndung zu diesen frei beweglich ist, ist für diesen keine weitere karosserleseitige Montage erforderlich. Sofern beispielsweise die Teilgelenke jeweils als Viergelenke ausgebildet sind, beschränkt sich die Montage am Fahrzeug auf die Festlegung zweier Gelenkpunkte des unteren Teilgelenks an der Karosserie und die Festlegung zweier Gelenkpunkte des oberen Teilgelenks am Dekkelteil. Der Montageaufwand ist daher gegenüber einem einfachen Viergelenk nicht erhöht.

In der Version des insgesamt zu öffnenden Mehrgelenks ist besonders vorteilhaft das Mehrgelenk ein Viergelenk, wobei zwei Gelenkpunkte dem Deckelteil und zwei Gelenkpunkte dem Hilfsrahmen zugeordnet sind. Dann können die dem Hilfsrahmen und dem Deckelteil zugeordneten Gelenkpunkte über Lenker miteinander verbunden sein, die in Öffnungsstellung den Abstand zwischen dem Hilfsrahmen und dem Dekkelteil überbrücken. In geschlossener Stellung sind diese Lenker im wesentlichen horizontal und parallel zum Seitenarm des Hilfsrahmens ausgerichtet, so daß sie im Seitenbereich ohne nennenswerte Einschränkung des Kofferreumvolumens halterbar sind.

Weitere Vorteile und Einzelheiten ergeben sich aus nachfolgend beschriebenen und in der Zeichnung dargestellten Ausführungsbeispielen des Gegenstandes der Erfindung.

In der Zeichnung zeigt:
- Fig. 1: eine schematische Seitenansicht eines hinteren Teils eines Cabriolet-Fahrzeugs einer ersten Version in geschlossener Stellung,
- Fig. 2: das Detail II In Fig. 1,
- Fig. 3: eine ähnliche Ansicht wie Fig. 2 während der Öffnung des Deckelteils zur Freigabe der Durchtrittsöffnung für das Dach,
- Fig. 4: eine ähnliche Ansicht wie Fig. 3 bei weiterem Aufschwenken des Deckelteils,
- Fig. 5: eine ähnliche Ansicht wie Fig. 2 während der Öffnung des Deckelteils zur Freigabe der Aufnahmeöffnung für Gepäck,
- Fig. 6: eine ähnliche Ansicht wie Fig. 5 bei weiterer Öffnung,
- Fig. 7: eine schematische Seitenansicht eines hinteren Teils eines Cabriolet-Fahrzeugs einer zweiten Version mit einem Viergelenk, von dem zwei Gelenkpunkte in separaten Führungskulissen des Hilfsrahmens zwangsgeführt sind, in geschlossener Stellung,
- Fig. 8: das Detail VIII in Fig. 7,
- Fig. 9: eine ähnliche Ansicht wie Fig. 8 während der Öffnung des Deckelteils zur Freigabe der Durchtrittsöffnung für das Dach,
- Fig. 10: eine ähnliche Ansicht wie Fig. 9 bei weiterem Aufschwenken des Deckelteils,
- Fig. 11: eine ähnliche Ansicht wie Fig. 8 während der Öffnung des Deckelteils zur Freigabe der Aufnahmeöffnung für Gepäck,
- Fig. 12: eine ähnliche Ansicht wie Fig. 11 bei weiterer Öffnung,

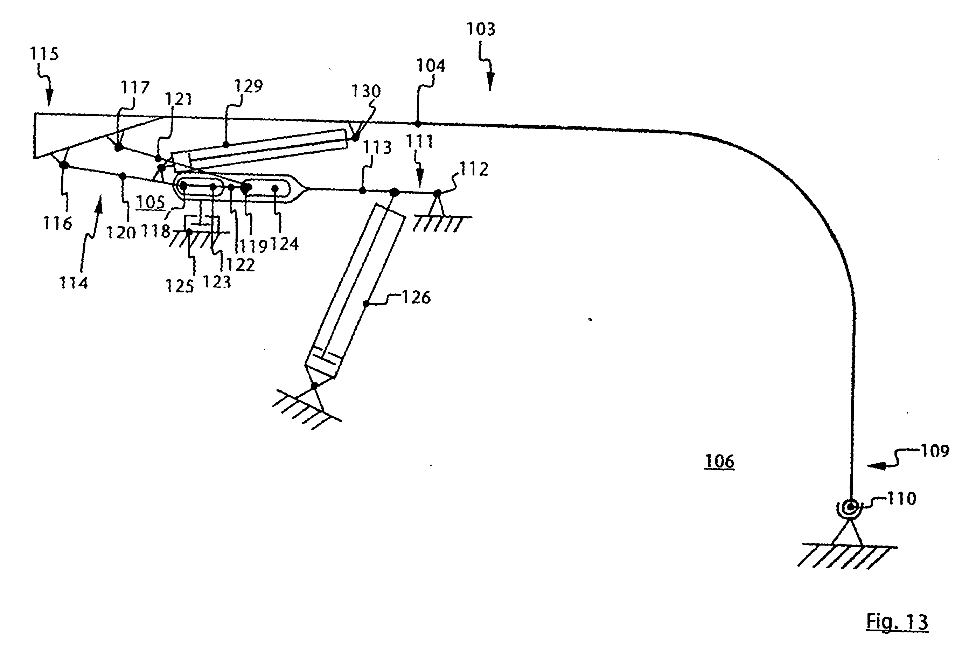

- Fig. 13: eine schematisierte Ansicht der Lage der Funktionsteile in Stellung nach Fig. 8,

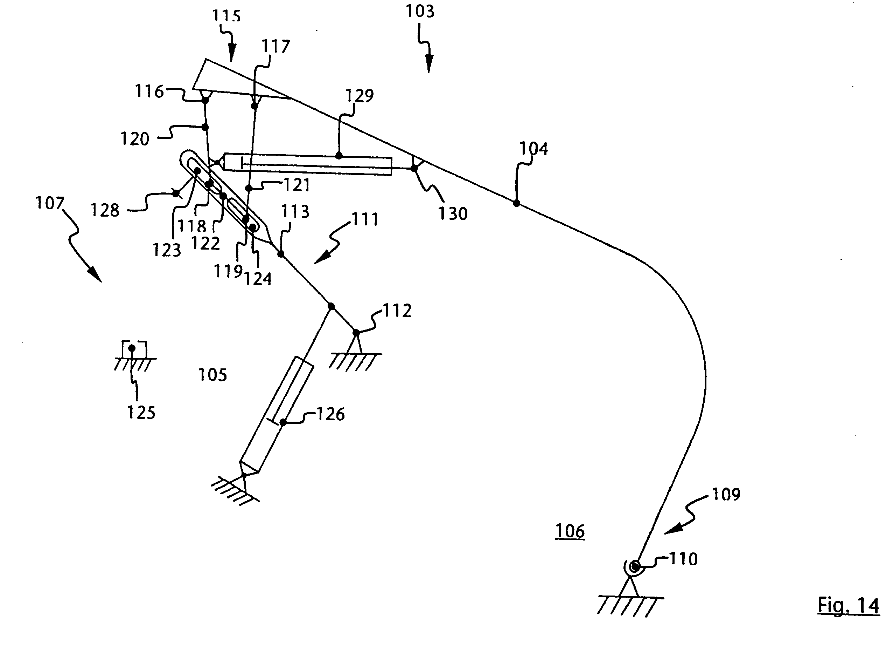

- Fig. 14: eine schematisierte Darstellung der Funktionsteile nach Fig. 9,

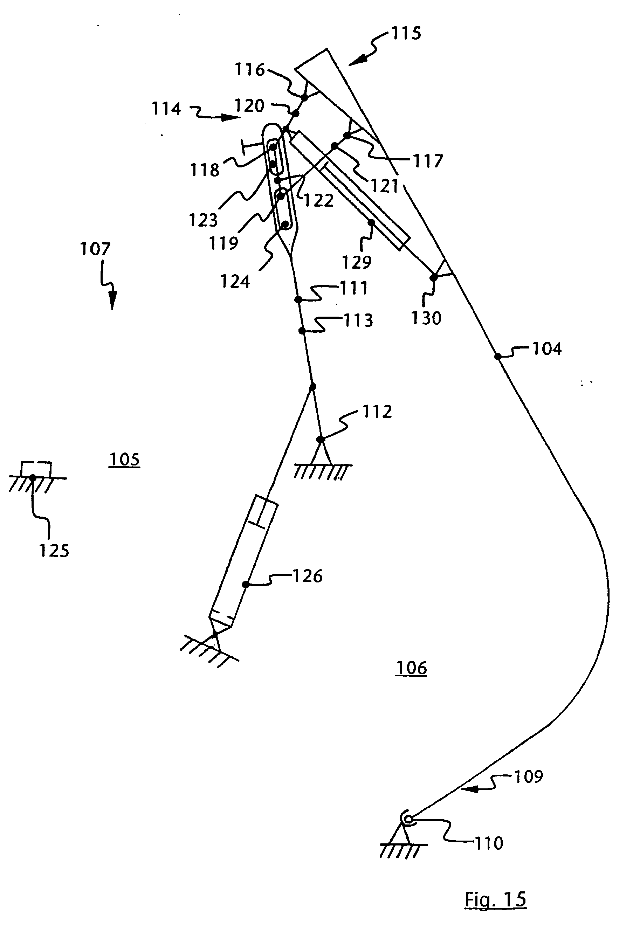

- Fig. 15: eine schematisierte Darstellung der Funktionsteile nach Fig. 10,

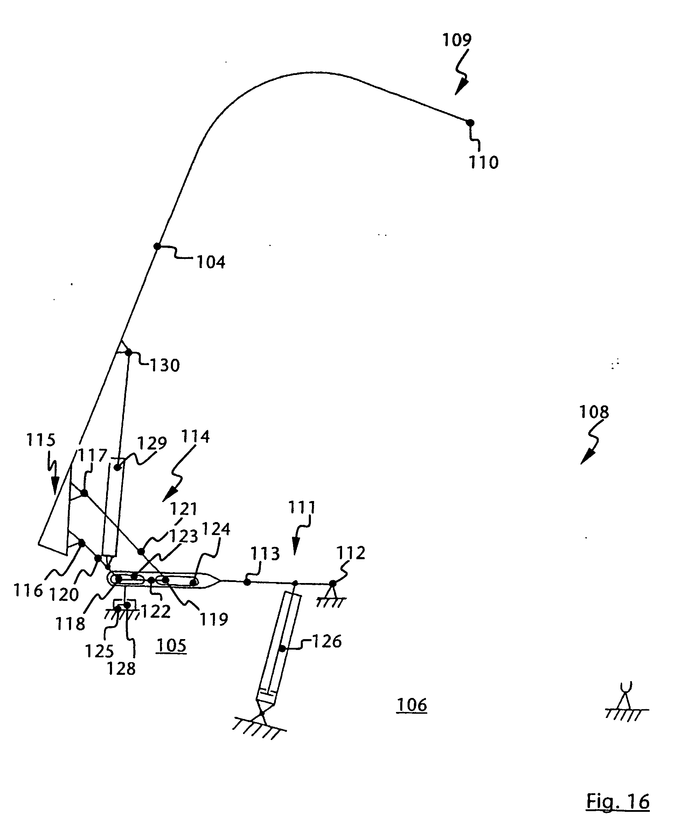

- Fig. 16: eine schematisierte Darstellung der Funktionsteile nach Fig. 12,
- Fig. 17: eine ähnliche Ansicht wie Fig. 8 eines alternativen Ausführungsbeispiels,
- Fig. 18: eine ähnliche Ansicht wie Fig. 17 während der Öffnung des Deckelteils zur Freigabe der Durchtrittsöffnung für das Dach,
- Fig. 19: eine ähnliche Ansicht wie Fig. 18 bei vollständig geöffnetem Deckelteil,
- Fig. 20: eine ähnliche Ansicht wie Fig. 17 während des Öffnens des Deckelteils zur Freigabe der Aufnahmeöffnung für Gepäck,
- Fig. 21: eine ähnliche Ansicht wie Fig. 20 bei vollständig geöffnetem Deckelteil,
- Fig. 22: eine von schräg hinten gesehene Detailansicht des seitlichen Arms des Hilfsrahmens,
- Fig. 23: eine Detailansicht der Führung der Gelenkpunkte in der gekrümmten Führungskulisse.

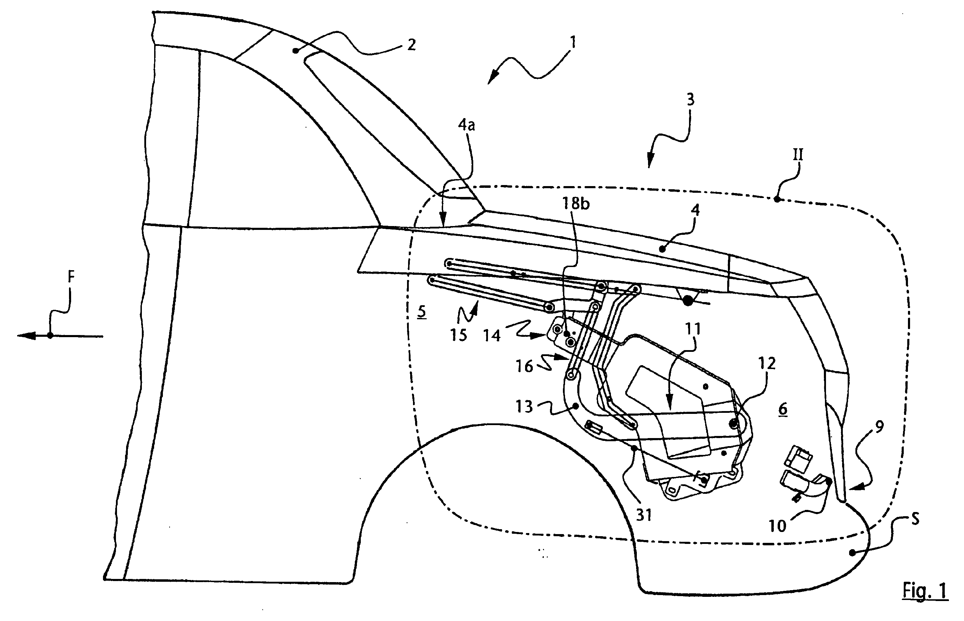

In Fig. 1 ist ein Cabriolet-Fahrzeug 1 eines ersten Ausführungsbeispiels in abgebrochener Darstellung gezeigt, das mit einem bereichsweise flexiblen oder insgesamt als Festverdeck ausgebildeten Dach 2 versehen ist. Das Dach 2 ist im rückwärtigen Fahrzeugbereich 3 unterhalb eines Deckelteils 4 ablegbar. Dieses überdeckt bei geöffnetem Dach 2 in Doppelfunktion sowohl einen Aufnahmeraum 5 für das geöffnete Dach 2 als auch einen Gepäckaufnahmeraum 6.

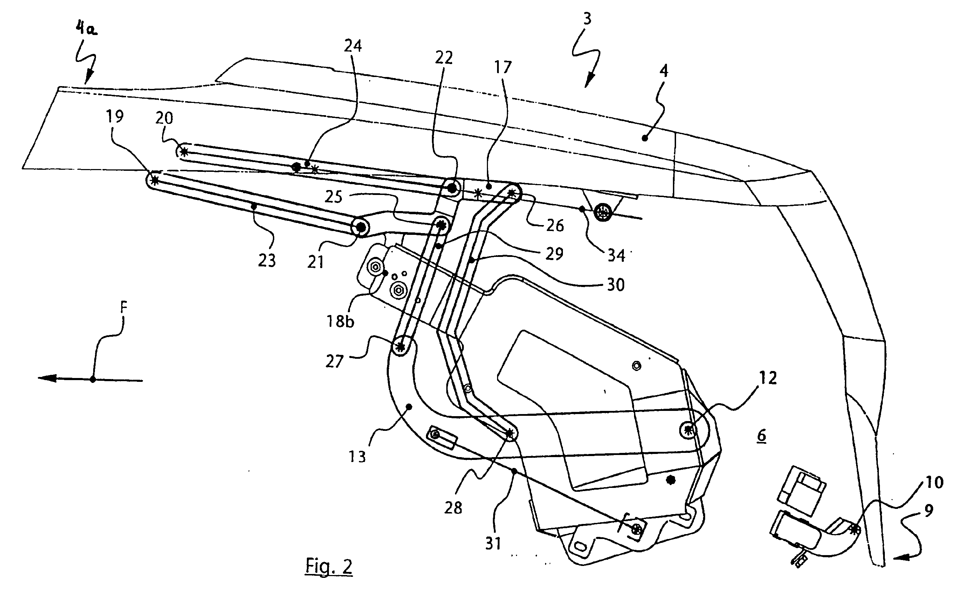

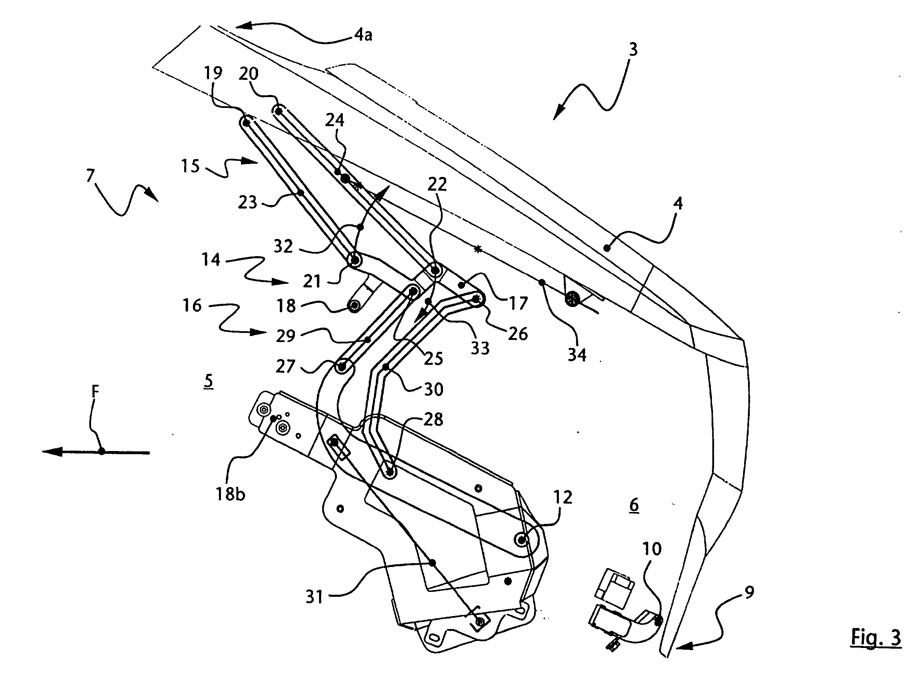

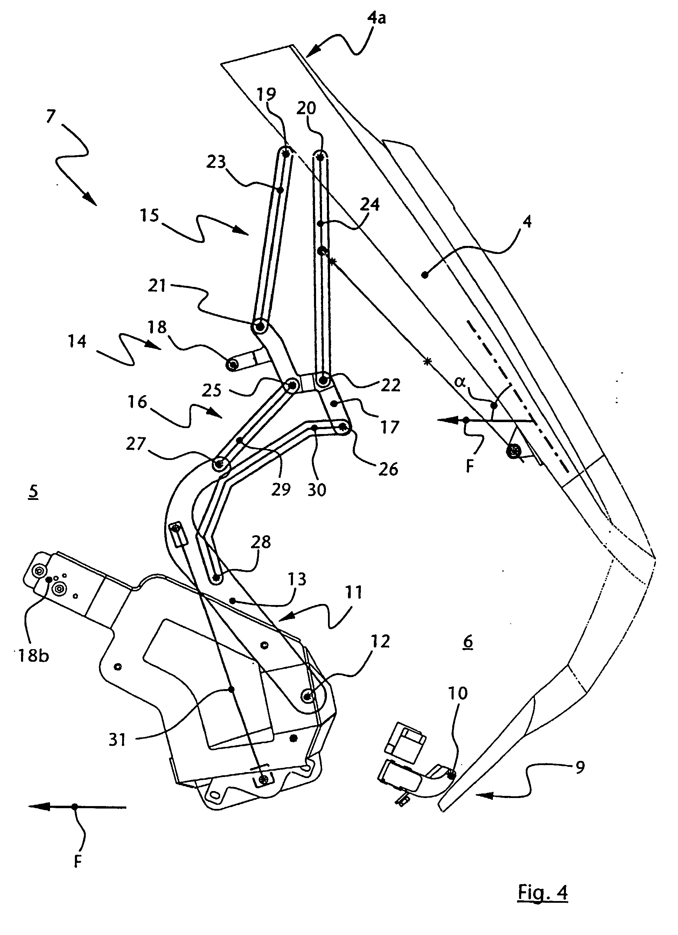

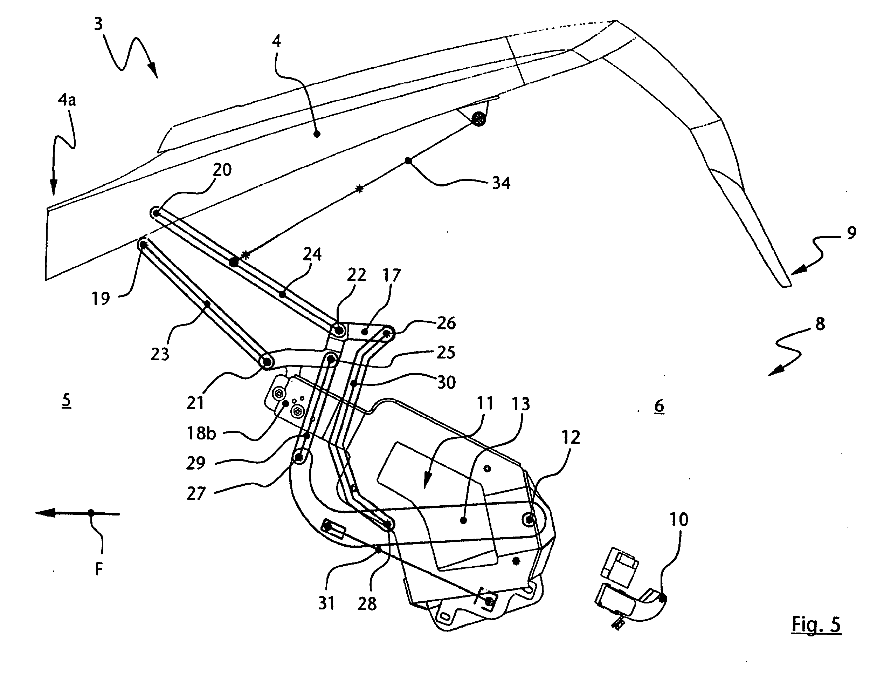

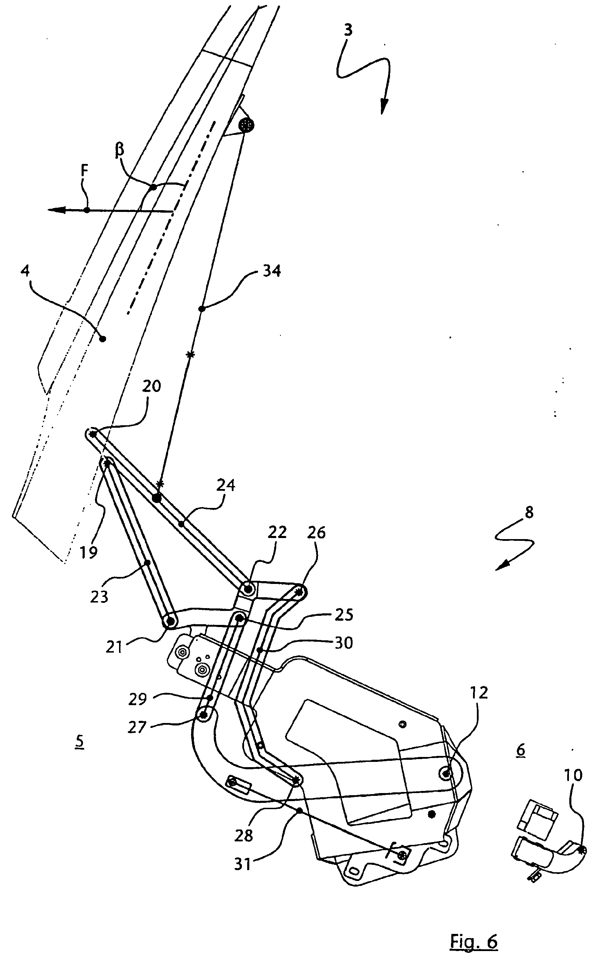

Das Deckelteil 4 kann zur Freigabe einer Dachaufnahmeöffnung 7 (Fig. 3, Fig. 4) gegen die Fahrtrichtung F in einem spitzen Winkel α öffnen. Weiterhin ist ein gegensinniges Öffnen (Fig. 5, Fig. 6) des Deckelteils 4 unter Einschluß eines stumpfen Winkels β mit der Fahrtrichtung F zur Freigabe einer Aufnahmeöffnung 8 zum Be- oder Entladen des Kofferraums 6 möglich. Das Deckelteil 4 ist in seinem rückwärtigen Endbereich 9 an einer Scharniervorrichtung 10 gehalten, die eine Festlegung des Deckelteils 4 sowohl bei vollständig geschlossenem Zustand (Fig. 1, Fig. 2) als auch bei Freigabe der Durchtrittsöffnung 7 für das Dach 2 (Fig. 3, Fig. 4) sicherstellt. Die Scharniervorrichtung 10 ist, insbesondere um kleine Spaltmaße im Übergang zwischen dem Deckelteil 4 und einer Stoßstange S sicherzustellen, als reine Schwenkbewegung ausgebildet.

Das Deckelteil 4 ist außer über das rückwärtige Scharnier 10 noch über einen Hilfsrahmen 11 gehalten, der in seinem rückwärtigen Bereich über ein Schwenklager 12 an der Fahrzeugkarosserie schwenkbar gehalten ist. Der Hilfsrahmen 11 umfaßt zwei den Fahrzeugseiten zugeordnete und sich vom Schwenklager 12 in Fahrtrichtung F entlang zweier vertikaler Längsebenen erstreckende Seitenarme 13, die an ihrem vorgeordneten, dem Schwenklager 12 abgewandten Ende mit einem Mehrgelenk 14 verbunden sind, das anderenends mit dem vorderen Endbereich 4a des Deckelteils 4 in Verbindung steht.

Das Mehrgelenk 14 umfaßt im Ausführungsbeispiel zwei miteinander gekoppelte Tellgelenke 15,16, von denen eines dem Deckelteil 4 und das andere dem Hilfsrahmen 11 zugeordnet ist. Die Teilgelenke 15,16 sind über einen in sich starren Koppelkörper 17 miteinander verbunden. Der Koppelkörper 17 ist als in der Bewegungsebene der seitlichen Arme 13 liegender, mehrfach abgewinkelter Lenker ausgebildet. Er ist in geöffneter Stellung des Deckelteils 4 zur Freigabe der Durchtrittsöffnung 7 für das Dach 2 frei beweglich und nur über die Teilgelenke 15 und 16 gehalten. In geschlossener Stellung des Deckelteils 4 sowie in Öffnungsstellung zur Freigabe der Aufnahmeöffnung 8 für Gepäck ist der Koppelkörper 17 über einen vorderseitig mit diesem starr verbundenen Riegel 18 in einem Schloß 18b blockiert. In diesen Stellungen ist daher eine Bewegung des Koppelkörpers 17 nicht möglich.

Das Teilgelenk 15 ist ebenso wie das Teilgelenk 16 im Ausführungsbeispiel als Viergelenk ausgebildet, was allerdings nicht zwingend ist. Das Teilgelenk 15 umfaßt zwei am Deckelteil 4 gelagerte Gelenkpunkte 19,20 und zwei am Koppelkörper 17 angeordnete Gelenkpunkte 21,22. Zur Verbindung von Deckelteil 4 und Koppelkörper 17 sind die Gelenkpunkte 19 und 21 über einen Lenker 23, die Gelenkpunkte 20 und 22 über einen weiteren Lenker 24 miteinander verbunden.

Das untere Teilgelenk 16 umfaßt zwei dem Koppelkörper zugeordnete Gelenkpunkte 25 und 26 sowie zwei dem seitlichen Arm 13 zugeordnete Gelenkpunkte 27 und 28. Zur Verbindung von Koppelkörper 17 und seitlichem Arm 13 sind die Gelenkpunkte 25 und 27 über einen Lenker 29 und die Gelenkpunkte 26 und 28 über einen Lenker 30 miteinander verbunden.

Alle Gelenkpunkte 19,20,21,22,25,26,27,28 sind an dem jeweiligen Bauteil (Deckelteil 4 bzw. Koppelkörper 17 bzw. Seitenarm 13) um bezüglich des jeweiligen Bauteils ortsfeste Schwenkachsen schwenkbar angeordnet.

In geschlossener Stellung (Fig. 2) befinden sich die Lenker 23 und 24 in einer nahezu horizontalen Stellung, die Lenker 29 und 30 des dem Hilfsrahmen 11 zugeordneten Teilgelenks 16 sind hingegen nahezu vertikal. Der Koppelkörper 17, an dem die Anlenkung der Lenker 23,29,24,30, nämlich die Gelenkpunkte 21,25,22,26 alternierend aufeinander folgen, liegt nahezu horizontal.

Durch Öffnung des seitlichen Arms 13 des Hilfsrahmens 11 über ein Antriebsorgan 31, beispielsweise einen Hydraulikzylinder, zur Freigabe der Durchtrittsöffnung 7 für das Dach 2 wird eine Verlagerung des Teilgelenks 16 um die rückwärtige Anlenkung 12 des seitlichen Arms 13 in eine gegen die Fahrtrichtung F weisende Richtung bewirkt. Die beiden dem Koppelkörper 17 zugeordneten Gelenkpunkte 25,26 werden ebenfalls nach hinten verlagert, wobei der Koppelkörper 17 durch Freigabe des Schlosses 18b beweglich wird.

Zudem wird der Koppelkörper 17 im spitzen Winkel gegenüber der Fahrtrichtung F verkippt, wobei der Gelenkpunkt 26 gegenüber dem Gelenkpunkt 25 abwärts gezogen wird. Dadurch, daß die Gelenkpunkte des oberen Teilgelenks 15 und des unteren Teilgelenks 16 alternierend aufeinander folgen und der Gelenkpunkt 22 des Lenkers 24 zwischen den Gelenkpunkten 25 und 26 gelegen ist, wird dieser ebenfalls gegenüber dem Gelenkpunkt 21 des vorderen Lenkers 23 des oberen Teilgelenks 15 nach unten verlagert. Das Teilgelenk 15 stellt sich daher vertikal auf (Fig. 4), d. h., daß die Lenker 23,24 durch die unterschiedliche Verlagerung ihrer Gelenkpunkte 21,22 in Richtung der Pfeile 32,33 in die vertikale Endstellung gemäß Fig. 4 gelangen, in der das Mehrgelenk 14 insgesamt aufgestellt ist, auch wenn das untere Teilgelenk 16 gegenüber der Ausgangsstellung (Fig. 1, Fig. 2) keine vertikale Aufstellung seiner Lenker 29,30 erfahren hat. Vielmehr sind diese Lenker nur geringfügig in ihrer Winkelstellung gegenüber dem Lot verändert, haben jedoch die Kippbewegung des Koppelkörpers 17 und damit die Aufstellung des Gelenkpunkts 21 gegenüber dem Gelenkpunkt 22 bewirkt.

Somit ist insgesamt für das Mehrgelenk 14 eine Schwenk- und Hubbewegung erreicht.

Durch die schwanenhalsartige Aufwärtskrümmung des seitlichen Arms 13 ist der benötigte Raum im Heckbereich 3 sehr gering. Die seitlichen Arme 13 können extrem kurz gehalten werden. Zudem kann das Hauptlager 12 in einer niedrigen Lage innerhalb der Karosserie angeordnet werden.

Die Hilfsrahmen 11 mit den Antriebsorganen 31 und den Lagern 12 können insgesamt als Module in seitlich vom Kofferraum 6 angeordneten Seitentaschen eingesetzt werden. Dadurch, daß das untere Teilgelenk 16 bezüglich seiner Winkelstellung der Lenker 29,30 gegenüber dem Lot sich bei Öffnung nur wenig ändert, kann die Seitentasche nach vorne begrenzt sein, so daß wenig Kofferraum verlorengeht. Die Lenker 23,24 des dem Deckelteil 4 zugeordneten Teilgelenks 15 können in geschlossener Stellung dadurch, daß der Kopplungskörper 17 im Bereich der Oberkante des Kofferraums 6 unmittelbar unterhalb des Deckelteils 4 gehalten ist, dicht an das Deckelteil 4 angelegt sein, so daß auch hier wenig Raum verlorengeht.

Zur Freigabe der Aufnahmeöffnung 8 für Gepäck (Fig. 5, Fig. 6) bleibt das Schloß 18b in seiner arretierten Stellung. Der Koppelkörper 17, der mit dem Riegel 18 verbunden ist, verbleibt daher unbeweglich. Das untere Teilgelenk 16 ist daher an einer Bewegung gehindert. Lediglich das obere Viergelenk 15 kann geöffnet werden, wobei die dem Koppelkörper 17 zugeordneten Gelenkpunkte 21,22 ortsfest und lediglich schwenkbeweglich verbleiben. Es öffnet also insgesamt nur das obere Teilgelenk 15, d. h., daß sich die Lenker 23,24 aufstellen und somit nur die Gelenkpunkte 19,20 verlagert werden. Zur Unterstützung der Öffnungsbewegung ist ein Gasdruckzylinder 34 vorgesehen. Auch ein Hydraulikzylinder oder ein ähnliches Unterstützungsorgan kommt in Betracht. Der Gasdruckzylinder 34 ist hier am Lenker 24 angelenkt. Dadurch liegt er bei geschlossenem Deckelteil 4 dicht an diesem in einer nahezu horizontalen Stellung, so daß das Kofferraumvolumen nicht eingeschränkt ist.

Das Öffnen zur Freigabe der Aufnahmeöffnung 8 für Gepäck entspricht daher der Überlagerung einer Schwenk- und Hubbewegung bei einem üblichen Viergelenk.

Mit der Erfindung ist ein sehr kurzer seitlicher Arm 13 realisiert der aufgrund seinen geringen Trägheitsmoments leicht zu bewegen ist und sehr raumsparand in seitlichen Teschen neben dem Kofferraum 6 angeordnet werden kann.

Durch die Zwangskopplung der Teilgelenke 15,16 über den Koppelkörper 17 ist weiterer Steueraufwand zum Erreichen der überlagerten Hub- und Schwenkbewegung zur Freigabe der Durchtrittsöffnung 7 für Gepäck bei Öffnung des Deckelteils 4 entbehrlich. Auch das Schloß 18b kann über den Hydraullkzylinder 31 zum Schwenken des Hilfserms 11 entriegelt werden.

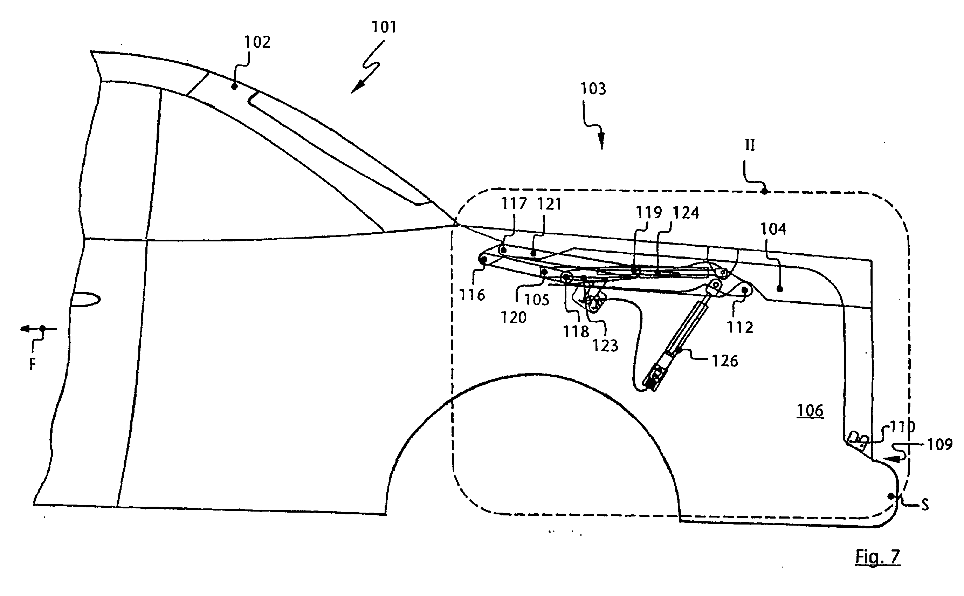

In Fig. 7 ist ein Cabriolet-Fahrzeug 101 eines zweiten Ausführungsbeispiels in abgebrochener Darstellung gezeigt, das ebenfalls mit einem bereichsweise flexiblen oder insgesamt als Festverdeck ausgebildeten Dach 102 versehen ist. Dieses ist im rückwärtigen Fahrzeugbereich 103 unter einem Deckelteil 104 ablegbar. Das Deckelteil 104 ist prinzipiell gleichartig oder ähnlich wie das Deckelteil 4 des ersten Ausführungsbeispiels und überdeckt auch hier in Doppelfunktion sowohl einen Verdeckaufnahmeraum 105, in dem das Dach 102 in geöffneter Stellung gehalten ist, als auch einen Gepäckaufnahmeraum 106.

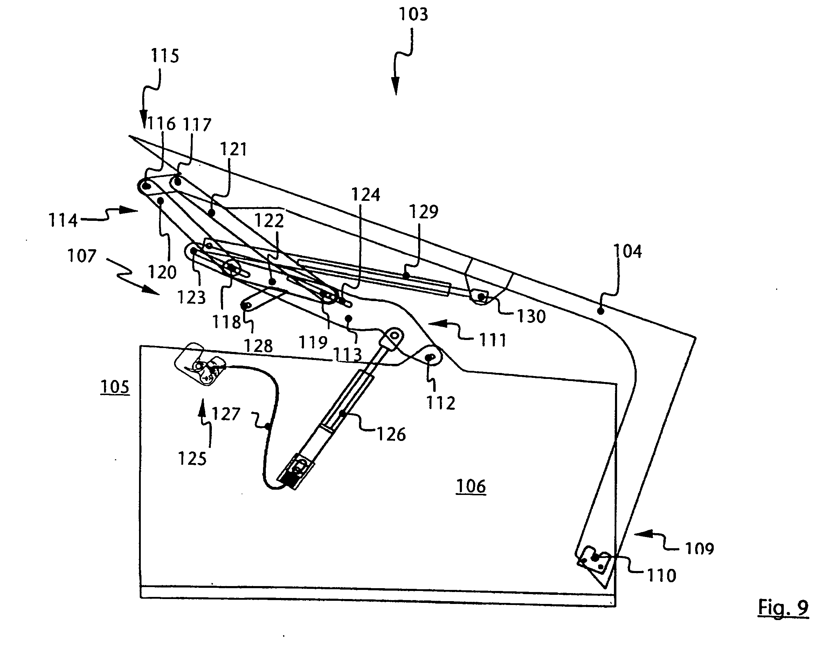

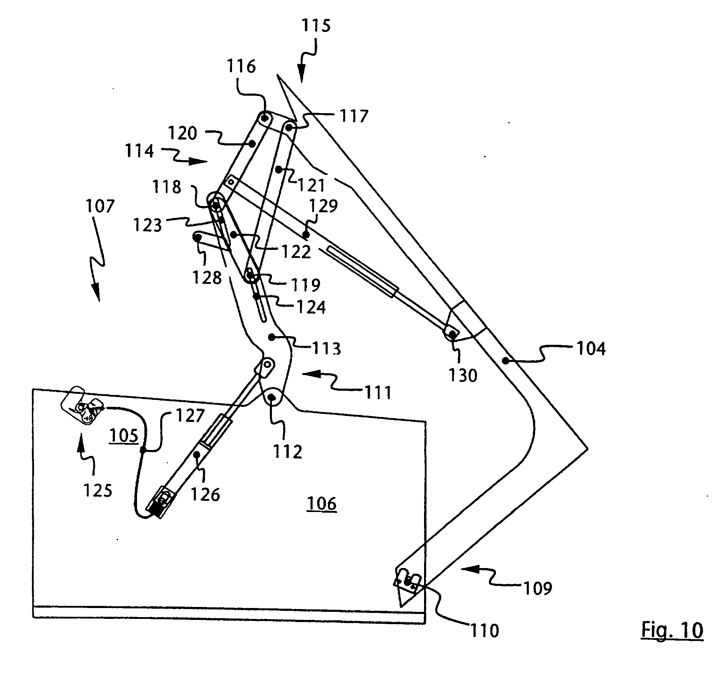

Das Deckelteil 104 kann ebenso zur Freigabe einer Dachaufnahmeöffnung 107 (Fig. 9, Fig. 10) gegen die Fahrtrichtung F in einem spitzen Winkel öffnen.

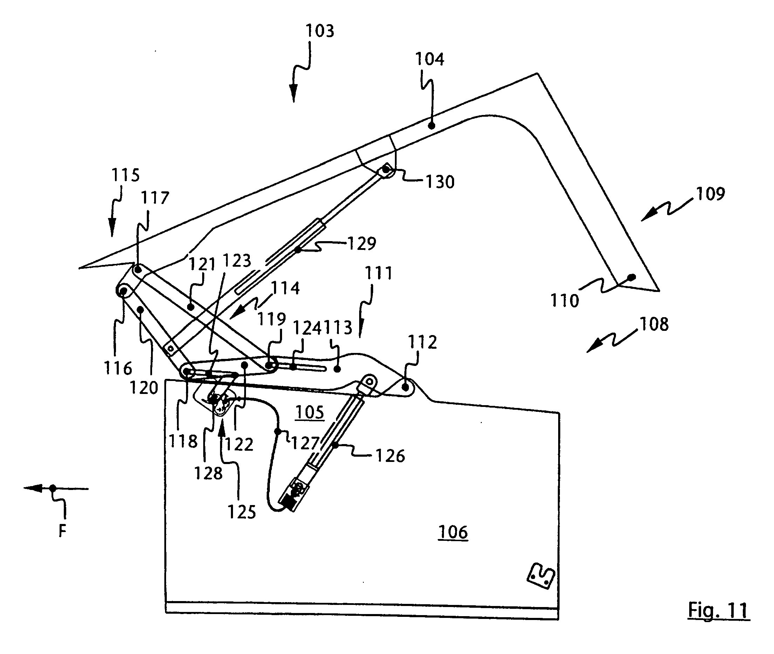

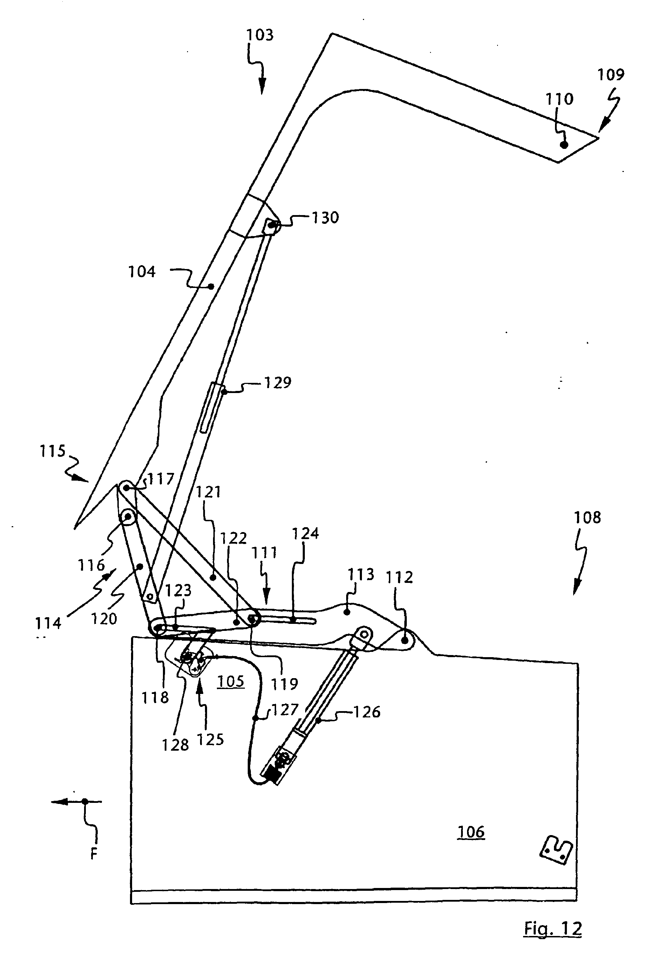

Weiterhin ist auch ein gegensinniges Öffnen (Fig. 11, Fig. 12) des Deckelteils 104 unter Einschluß eines stumpfen Winkels mit der Fahrtrichtung F zur Freigabe einer Aufnahmeöffnung 108 zum Be- oder Entladen des Kofferraums 106 möglich. Das Deckelteil 104 ist in seinem rückwärtigen Endbereich 109 an einer wie im ersten Ausführungsbeispiel ausgebildeten Scharniervorrichtung 110 gehalten, die eine Festlegung des Deckelteils 104 sowohl bei vollständig geschlossenem Zustand (Fig. 7) als auch bei Öffnung der Durchtrittsöffnung für das Dach 102 (Fig. 9, 10) sicherstellt.

Das Deckelteil 104 ist außer über das rückwärtige Scharnier 110 noch über einen Hilfsrahmen 111 gehalten, der in seinem rückwärtigen Bereich über ein Schwenklager 112 an der Fahrzeugkarosserie beweglich gehalten ist. Der Hilfsrahmen 111 umfaßt zwei den Fahrzeugseiten zugeordnete und sich vom Schwenklager 112 In Fahrtrichtung F erstreckende Seitenarme 113 als koppelkörper die an ihrem dem Schwenklager 112 abgewandten Ende mit einem Mehrgelenk 114 verbunden sind, das anderenends mit dem vorderen Endbereich 115 des Deckelteils 104 in Verbindung steht.

Das Mehrgelenk 114 ist in den hier gezeigten Ausführungsbeispielen als Viergelenk ausgebildet, was allerdings nicht zwingend ist, und umfaßt zwei dem Dekkelteil 104 zugeordnete Gelenkpunkte 116, 117 sowie zwei den Seitenarmen 113 des Hilfsrahmens 111 zugeordnete Gelenkpunkte 118,119.

Zur Verbindung von Deckelteil 104 und Hilfsrahmen 111 sind die Gelenkpunkte 116 und 118 mittels eines Lenkers 120, die Gelenkpunkte 117 und 119 mittels eines Lenkers 121 verbunden.

Die Gelenkpunkte 116 und 117 sind am Dekkelteil 104 jeweils ortsfest angeordnet, die hilfsrahmenseitigen Gelenkpunkte 118 und 119 sind über einen weiteren Lenker 122, der den gleichbleibenden Abstand zwischen diesen Gelenkpunkten sicherstellt, miteinander verbunden, jedoch gemeinsam gegenüber dem Hilfsrahmen 111 verlagerbar. Hierfür sind den Gelenkpunkten 118,119 Achsstummel zugeordnet, die in Führungskullssen 123,124 der Seitenarme 113 des Hilfsrahmens 111 verschieblich sind.

Die Führungskullssen 123,124 erstrecken sich in geschlossener Stellung des Hilfsrahmens 111 in Fahrtrichtung F und schwenken mit den Seitenarmen 113 des Hilfsrahmens 111 in eine aufwärts weisende Stellung bei Öffnung des Deckelteils 104 zur Freigabe der Durchtrittsöffnung 107 für das Dach (Fig. 9, 10).

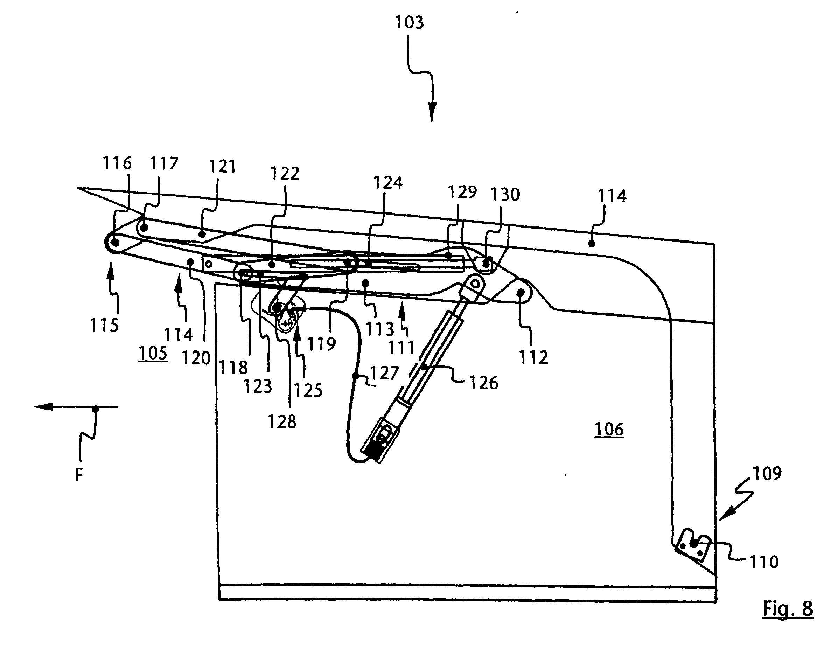

Es ist weiterhin ein Schloß 125 vorgesehen, das das Deckelteil 104 über Festlegung der Gelenkpunkte 118,119 in geschlossener Stellung (Fig. 8) erretiert. Durch Ausschub der Kolbenstange des Hydraulikzylinders 126, der die Aufwärtsbewegung des Seitenarms 113 zur Freigabe der Durchtrittsöffnung 107 für das Dach 102 bewirkt, wird über einen Bowdenzug 127 das Schloß 125 gelöst, so daß ein hiervon gehaltener Querriegel 128, der mit dem Lenker 122 verbunden ist und die Gelenkpunkte 118 und 119 in geschlossener Position hält, außer Eingriff gebracht wird und das vordere Ende des Deckelteils 104 abheben kann durch weiteren Ausschub der Kolbenstange des Hydraulikzyllnders 126.

In geschlossener Stellung (Fig. 8) befinden sich die Gelenkpunkte 118,119 in in Fahrtrichtung F vorderer Extremalstellung in den Führungskuliesen 123,124. Während der Öffnung des Deckelteils 104 zur Freigabe der Durchtrittsöffnung für das Dach 102 werden die Gelenkpunkte 118,119 zunächst in den Führungskulissen 123,124 entgegen der Fahrtrichtung F verlagert, dabei bewegen sich die Lenker 120,121 aus ihrer im wesentlichen horizontalen Lage in eine gegenüber dem Seitenarm 113 des Hilfsrahmens 111 abgewinkelte und aufwärts gerichtete Lage, wodurch das Deckelteil 104 sich mit seinem vorderen Endbereich 115 vom Seitenarm 113 entfernt. Bei weiterer Öffnung des Deckelteils 104 in dem genannten Sinne (Fig. 10) gehen die Lenker 120,121 in eine im wesentlichen vertikale Stellung über, wodurch der Abstand vom vorderen Ende des Seitenarms 113 des Hilfsrahmens 111 zum vorderen Ende 115 des Deckelteils 104 maximiert ist. Zudem schieben sich dabei die Gelenkpunkte 118,119 in den Führungkullssen 123,124 wieder in die vordere Extremalstellung, so daß die Verbindung aus Seitenarm 113 und Lenkern 120,121 eine maximal mögliche Länge erreicht. Die Anlenkpunkte 116, 117 am Deckelteil 104 Ilegen dabei in etwa über dem Hauptlager 112 des Hilfsrahmens 111. Dieses kann daher sehr welt nach vorne verlagert werden, so daß rückwärtig dieses Lagers 112 die volle Kofferraumbreite zur Verfügung steht und hinreichend Ladevolumen oder Zugänglichkeit für die Rückleuchten verbleibt.

Zur Freigabe der Aufnahmeöffnung 108 für Gepäck (Fig. 11, 12) bleibt das Schloß 125 in seiner arretierten Stellung. Der mit dem Lenker 122 verbundene Querrriegel 128 verbleibt daher unbeweglich. Somit können auch die Gelenkpunkte 118 und 119 nicht bewegt werden. Es ist daher nur eine reine Schwenkbewegung um diese Gelenkpunkte möglich, die in der vorderen Extremalstellung in den Führungskulissen 123 und 124 verbleiben. Auch hier öffnet das Mehrgelenk 114, d. h., daß sich die Lenker 120 und 121 aufstellen. Somit ist insgesamt eine Schwenk- mit überlagerter Hubbewegung erreicht. Dieses entspricht dem üblichen Öffnen eines Mehrgelenks.

Zur Unterstützung der Öffnungsbewegung ist ein Gasdruckzylinder 129 vorgesehen, der sich einenends am Lenker 120 und anderenends an einem Lager 130 am Deckelteil 104 abstützt. Auch eine andere Anordnung des Gasdruckzylinders 129 oder eines ähnlichen Unterstützungsorgans, beispielsweise eines Hydraulikzylinders, kommt in Betracht. Bei der hier gezeigten Anordnung ist in Ruhestellung (Fig. 7, Fig. 8) der Gasdruckdämpfer 129 im Bereich der seitlichen Arme 113 gehalten, auch der Anlenkpunkt 130 am Deckelteil 104 liegt in Fahrtrichtung F vor dem Hauptlager 112, so daß die Einschränkung des Kofferraumvolumens durch den Gasdruckdämpfer 129 in geschlossener Stellung des Deckelteils 104 minimiert ist.

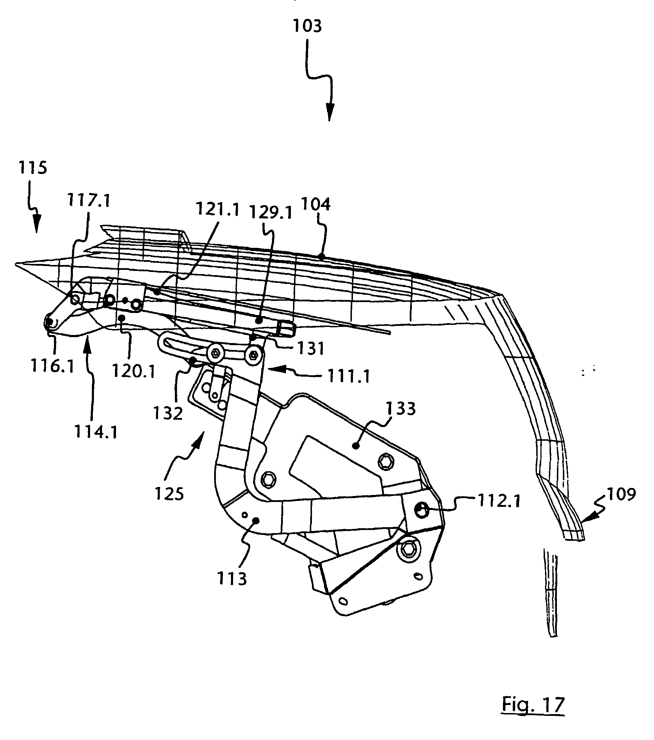

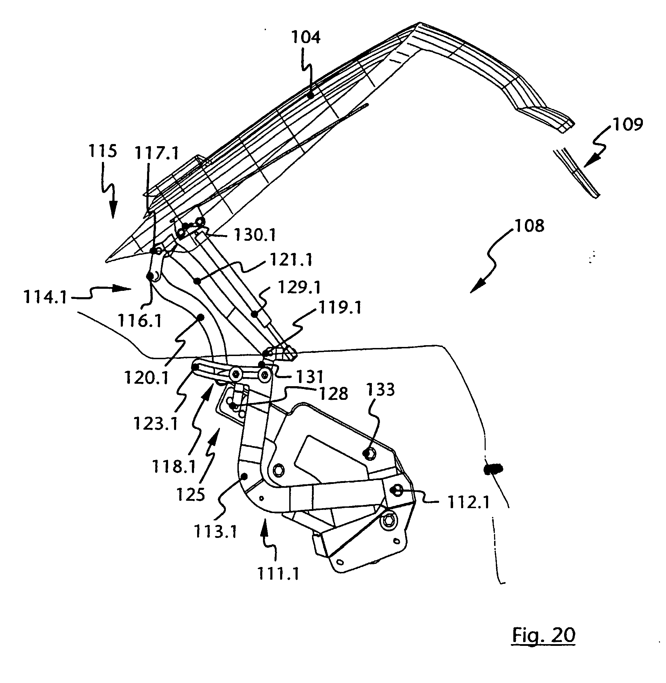

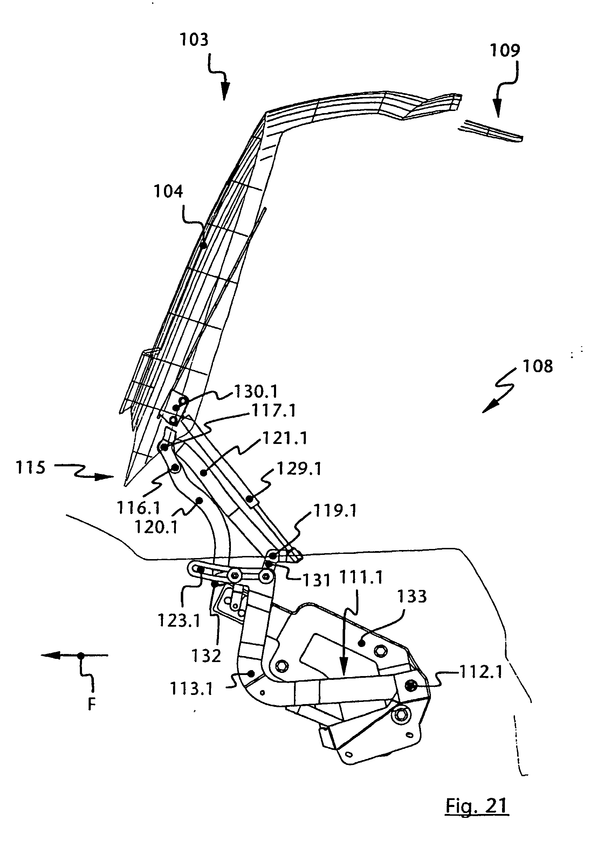

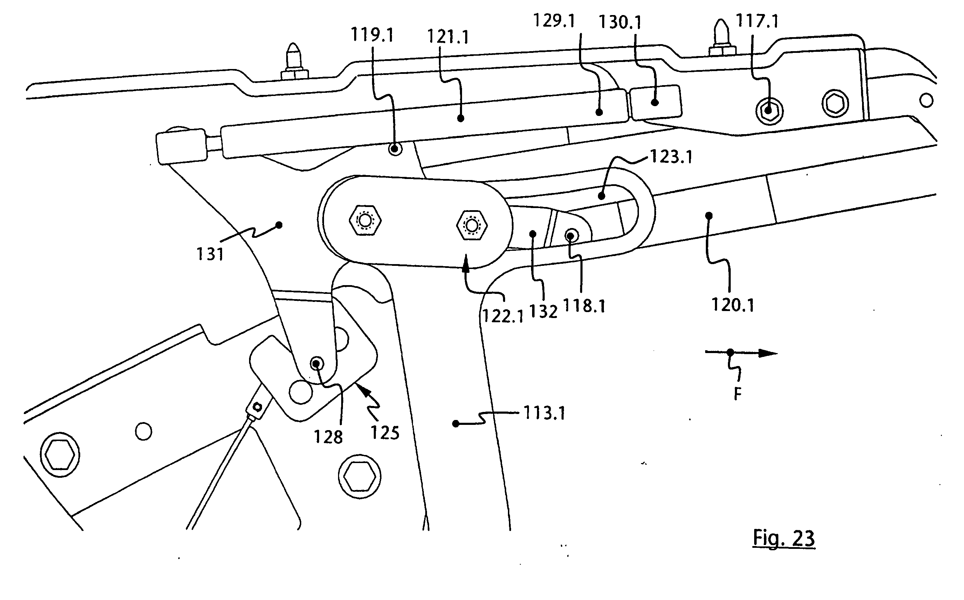

In einem dritten Ausführungsbeispiel (Fig. 17 bis Fig. 23) ist ebenfalls ein Viergelenk 114.1 vorgesehen, das zwei gegenüber dem Deckelteil 104 ortsfest angeordnete Gelenkpunkte 116.1 und 117.1 sowie zwei dem Hilfsrahmen 111.1 zugeordnete Gelenkpunkte 118.1 und 119.1 aufweist.

Zur Verbindung von Deckelteil 104 und Hilfsrahmen 111.1 sind die Gelenkpunkte 116.1 und 118.1 mittels eines Lenkers 120.1, die Gelenkpunkte 117.1 und 119.1 mittels eines Lenkers 121.1 verbunden.

Die hilfsrahmenseitigen Gelenkpunkte 118.1 und 119.1 sind über einen weiteren Lenker 122,1, der den gleichbleibenden Abstand zwischen diesen Gelenkpunkten sicherstellt, miteinander verbunden, jedoch gegenüber dem Hilfsrahmen 111.1 gemeinsam verlagerbar. Hierfür sind die Gelenkpunkte 118.1 und 119.1 als Achsstummel ausgebildet und in einer gemeinsamen, gekrümmten Führungskulisse 123.1 im Seitenarm 113.1 als koppelkörper des Hilfsrahmens 111.1 verschieblich.

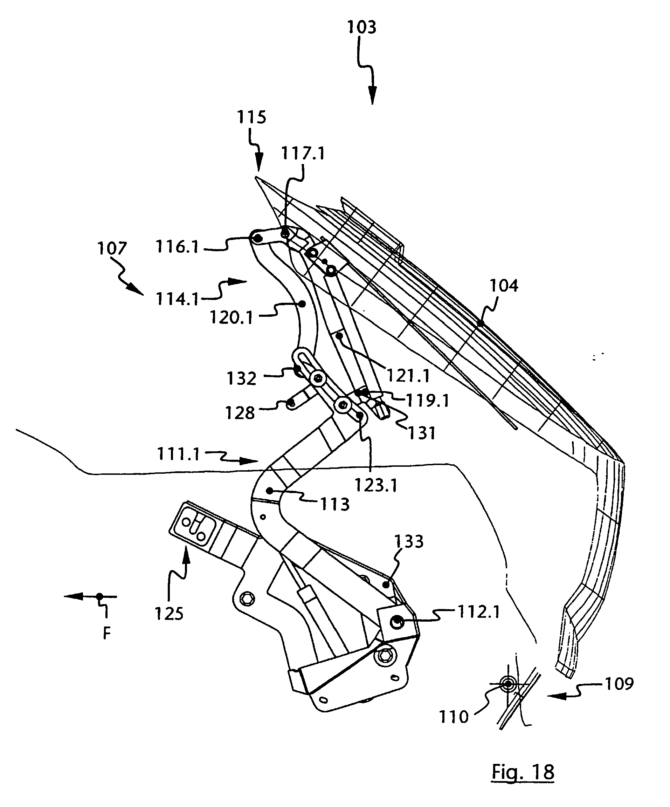

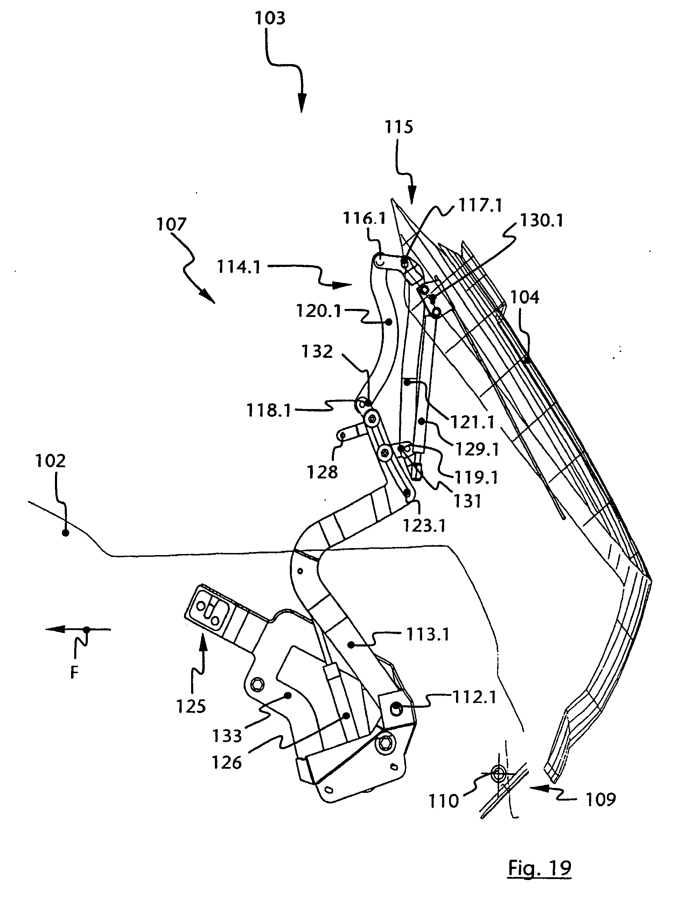

Die Führungskulisse 123.1 erstreckt sich in geschlossener Stellung des Hilfsrahmens 111.1 in Fahrtrichtung F, wobei sie sich von einem heckseitigen Ende nach vorne hin leicht aufwärts gekrümmt verläuft. Sie schwenkt mit den Seitenarmen 113.1 bei Öffnung des Deckelteils 104.1 zur Freigabe der Durchtrittsöffnung 107 für das Dach (Fig. 18, Fig. 19) in eine aufwärts weisende Stellung. Auch bei der Alternativersion ist ein Schloß 125 vorgesehen, das das Deckelteil 104 in geschlossener Stellung (Fig. 17) arretiert. Nach Lösung des Schlosses 125 kann ein Querriegel 128, der mit dem Lenker 122.1 verbunden ist und die Gelenkpunkte 118.1 und 119.1 In geschlossener Position hält, außer Eingriff gelangen, und das vordere Ende 115 des Dekkelteils 104 kann abheben.

In geschlossener Stellung (Fig. 17) befinden sich die Gelenkpunkte 118.1 und 119.1 in in Fahrtrichtung F hinterer Extremalstellung in der Führungskulisse 123.1. Während der Öffnung des Deckelteils 104 zur Freigabe der Durchtrittsöffnung 107 für das Dach 102 werden die Gelenkpunkte 118.1 und 119.1 in der gemeinsamen Führungskulisse 123.1 in Fahrtrichtung F verlagert, dabei bewegen sich die Lenker 120.1 und 121.1 aus ihrer im wesentlichen horizontalen Lage in eine gegenüber dem Seitenarm 113.1 des Hilfsrahmens 111.1 abgewinkelte und aufwärts gerichtete Lage, wodurch das Deckelteil 104 sich mit seinem vorderen Endbereich 115 vom Seitenarm 113.1 entfernt. Bei weiterer Öffnung des Deckelteils 104.1 in dem genannten Sinne (Fig. 19) gelengen die Lenker 120.1 und 121.1 In eine im wesentlichen vertikale Stellung, wodurch der Abstand vom vorderen Ende des Seitenarms 113.1 des Hilfsrahmens 111.1 zum vorderen Ende 115 des Dekkelteils 104 maximiert ist. Zudem schieben sich die Gelenkpunkte 118.1,119.1 in der Führungskulisse 123.1 in Richtung der vorderen Extremalstellung bezüglich der Führungskulisse 123.1, so daß die Verbindung aus Seitenarm 113 und Lenkern 120.1, 121.1 eine maximal mögliche Länge erreicht. Die Anlenkpunkte 116.1,117.1 ein Deckelteil 104.1 liegen denn in etwa über dem Hauptlager 112.1 des Hilfsrahmens 111.1. Dieses Hauptlager kann auch in dieser Ausführungsform sehr weit nach vorne verlagert sein. Zudem kann das Hauptlager 112.1 und das ihn tragende Gestänge 130 insgesamt als Modul in eine Seitentasche der Fahrzeugkarosserle eingesetzt werden.

Um die Verschleblichkeit der Gelenkpunkte 118.1 und 119.1 zu ermöglichen, sind diese an abgewinkelten Lenkern 131,132 gelagert, wobei diese Lenker 131,132 anderenends mit Rollen 133 verbunden sind, die in der Führungskulisse 123.1 verfahrbar sind.

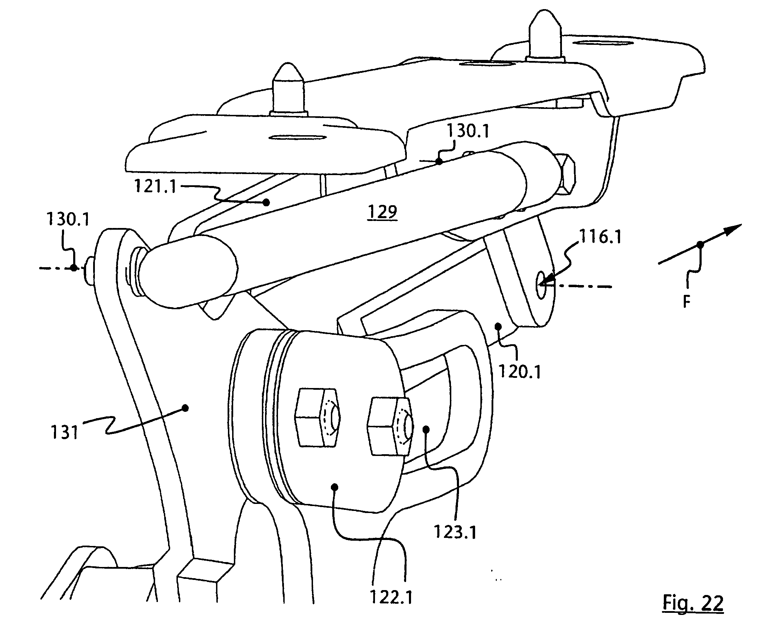

Die Ausbildung nach den Fig. 22 bis 24 zeigt leichte geometrische Abänderungen der abgewinkelten Lenker 131 und 132. In Jedern Fall sind diese gegenüber dem Lenker 122.1 ortsfest und tragen an ihren den Rollen 134,135 abgewandten Enden die Gelenkpunkte 118.1 und 119.1. An einem der Lenker 131 oder 132 kann zudem eine Lagerung für einen Gesdruckdämpfer 129.1 zur Unterstützung der Freigabe der Gepäckaufnahmeöffnung 108 vorgesehen sein.

Wie im zweiten Ausführungsbeispiel bleiben auch hier bei Öffnung des Deckelteils 104 zur Freigabe der Aufnahmeöffnung 108 für Gepäck die Gelenkpunkte 118.1 und 119.1 unbewegt, da das Schloß 125 für diese Bewegung nicht außer Eingriff gebracht wird und daher die Rollen 134 und 135 in der Führungskulisse 123.1 nicht beweglich sind. Es steht dann nur die normale Viergelenkversion ohne Verlagerung der Gelenkpunkte zur Verfügung.

In jedem Fall ist eine weit vorne liegende Anlenkung 112,112.1 des Hilfsrahmens 111 bzw. 111.1 ermöglicht, wodurch die Öffnungskinematik des Deckelteils 104 verbessert ist und im Heckbereich die räumlichen Verhältnisse großzügiger ausgebildet sind.

Die Kräfte zum Öffnen des Deckelteils 104 sind zudem relativ gering, da nur ein kurzer Hilfsrahmen 111 bzw. 111.1 bewegt werden muß, dessen Trägheitmoment gering ist. Die Lenker 120,121 bzw. 120.1,121.1 öffnen automatisch durch die Verlagerung der Gelenkpunkte 118, 119 bzw. 118.1,119.1 gegenüber dem Hilfsrahmen 111 bzw. 111.1, so daß weitere Steuerungsmechanismen entbehrlich sind. Auch die Entriegelung des Schlosses 125 erfolgt durch Ausschub der Kolbenstange des Hydraufikzylinders 126 automatisiert. Eine separate Ansteuerung des Schlosses 125 ist nicht erforderlich.

## Patentansprüche

1. Cabriolet-Fahrzeug (1;101) mit einem im rückwärtigen Fahrzeugbereich (3;103) unterhalb eines Deckelteils (4;104) ablegbaren Dach (2;102), wobei das Deckelteil (4;104) einerseits zur Freigabe einer seinem vorderen Endbereich (4a;115) benachbarten Durchtrittsöffnung (7,107) für das Dach (2;102) und andererseits zur Freigabe einer seinem hinteren Endbereich (9;109) benachbarten Aufnahmeöffnung (8;108) für Gepäck auf- und zubeweglich ist, und wobei ein Hilfsrahmen (11;111;111.1) unterhalb des Deckelteils (4;104) angeordnet ist, der in seinem in Fahrtrichtung (F) vorgeordneten Bereich über ein Mehrgelenk (14;114;114.1) mit dem Deckelteil (4;104) verbunden ist und in seinem rückwärtigen Bereich (12;112;112.1) gegenüber der Fahrzeugkarosserie beweglich gelagert ist und wobei das Mehrgelenk (14;114;114.1) bei Freigabe der Durchtrittsöffnung (7;107) für das Dach (2;102) in einer aufgestellten, den Abstand zwischen dem Deckelteil (4;104) und dem Hilfsrahmen (11;111;111.1) gegenüber der geschlossenen Stellung vergrößernden Lage gehalten ist, **dadurch gekennzeichnet, daß** das Mehrgelenk (14;114;114.1) an einem Koppelkörper (17;113;113.1) gelegene Gelenkpunkte (21,22,25,26;118,119;118.1,119.1) aufweist und daß über den Koppelkörper (17;113;113.1) die Gelenkpunkte (21,22,25,26;118,119;118.1,119.1.) bei Öffnung des Daches gegenüber dem Hilfsrahmens (11;111;111.1) verlagerbar sind.

2. Cabriolet-Fahrzeug nach Anspruch 1, **dadurch gekennzeichnet, daß** das Mehrgelenk (14) zumindest zwei gekoppelte Teilgelenke (15;16) umfaßt, von denen eines (15) am Deckelteil (4) und eines (16) am Hilfsrahmen (11) gelagert ist.

3. Cabriolet-Fahrzeug nach Anspruch 2, **dadurch gekennzeichnet daß** die Teilgelenke (15;16) über einen starren Koppelkörper (17), der in geöffneter Stellung des Deckelteils (4) zur Freigabe der Durchtrittsöffnung (7) für das Dach (2) außerhalb seiner Verbindung zu den Teilgelenken (15;16) frei beweglich ist, miteinander verbunden sind.

4. Cabriolet-Fahrzeug nach einem der Ansprüche 1 bis 3, **dadurch gekennzeichnet, daß** die Teilgelenke (15;16) jeweils mehrere mit dem Koppelkörper (17) schwenkbar verbundene Lenker (23,24;29,30) umfassen.

5. Cabriolet-Fahrzeug nach einem der Ansprüche 3 bis 4, **dadurch gekennzeichnet, daß** die Teilgelenke (15;16) jeweils zwei an dem Koppelkörper (17) gelagerte Gelenkpunkte (21,22;25,26) umfassen.

6. Cabriolet-Fahrzeug nach einem der Ansprüche 3 bis 5, **dadurch gekennzeichnet, daß** das dem Deckelteil (4) zugeordnete Teilgelenk (15) zwei an dem Deckelteil (4) gelagerte Gelenkpunkte (19;20) und das dem Hilfsrahmen (11) zugeordnete Teilgelenk (16) zwei an dem Hilfsrahmen (11) gelagerte Gelenkpunkte (27;28) aufweist.

7. Cabriolet-Fahrzeug nach einem der Ansprüche 1 bis 6, **dadurch gekennzeichnet, daß** das mit dem Hilfsrahmen (11) verbundene Teilgelenk (16) über eine Bewegung des Hilfsrahmens (11) und eine Kopplung mit dem Koppelkörper (17) eine Aufstellung der Lenker (23;24) des mit dem Deckelteil (4) verbundenen Teilgelenks (15) bewirkt.

8. Cabriofet-Fahrzeug nach Anspruch 1, **dadurch gekennzeichnet, daß** das Mehrgelenk (114; 114.1) ein Viergelenk ist, wobei zwei Gelenkpunkte (116,117;116.1,117.1) dem Deckelteil (104) und zwei weitere Gelenkpunkte (118,119:118.1,119.1) dem Hilfsrahmen (111:111.1) zugeordnet sind.

9. Cabriolet-Fahrzeug nach einem der Ansprüche 1 oder 8, **dadurch gekennzeichnet, daß** der oder die dem Hilfsrahmen (111;111.1) zugeordneten Gelenkpunkt(e) (118,119:118.1,119.1) gegenüber diesem verlagerbar gehalten sind.

10. Cabriolet-Fahrzeug nach Anspruch 9, **dadurch gekennzeichnet, daß** die Verlagerbarkeit bei Öffnung des Deckelteils (104) zur Freigabe der Aufnahmeöffnung (108) für Gepäck gehemmt ist.

11. Cabriolet-Fahrzeug nach einem der Ansprüche 1 oder einem der Ansprüche 8 bis 10, **dadurch gekennzeichnet, daß** zur Verlagerung des oder der dem Hilfsrahmen (111:111.1) zugeordneten Gelenkpunkte (118,119:118.1,119.1) zumindest ein als Führungskulisse (123;124;123.1) dienendes Langloch vorgesehen ist.

12. Cabriolet-Fahrzeug nach einem der Ansprüche 1 oder einem der Ansprüche 8 bis 11, **dadurch gekennzeichnet, daß** zwei Gelenkpunkte (118;119) in dem Hilfsrahmen (111) in zwei sich im wesentlichen geradlinig und in geschlossener Stellung in Fahrtrichtung erstreckenden Langlöchern (123;124) gehalten sind.

13. Cabriolet-Fahrzeug nach Anspruch 12, **dadurch gekennzeichnet, daß** in geschlossener Stellung des Deckelteils (104) die Gelenkpunkte (118;119) in den Langlöchern (123;124) in einer vorderen Extremalstellung gehalten sind, während der Öffnung des Deckelteils (104) zur Freigabe der Durchtrittsöffnung (107) für das Dach zunächst in eine rückwärtige Richtung verschieblich und bei weiterer Öffnung wiederum in Richtung des vorderen Extremalbereiches verlagerbar sind.

14. Cabriolet-Fahrzeug nach Anspruch 1 oder einem der Ansprüche 8 bis 11, **dadurch gekennzeichnet, daß** das Gelenk (114.1) ein Viergelenk ist und zwei der Gelenkpunkte (118.1:119.1) dem Deckelteil (104) und zwei weitere dem Hilfsrahmen (111.1) zugeordnet sind, wobei die dem Hilfsrahmen (111.1) zugeordneten Gelenkpunkte (118.1:119.1) in einer gemeinsamen Führungskulisse (123.1) verschieblich sind.

15. Cabriolet-Fahrzeug nach Anspruch 14, **dadurch gekennzeichnet, daß** die Führungskulisse (123.1) aufwärts gekrümmt ist.

16. Cabriolet-Fahrzeug nach einem der Ansprüche 13 oder 14, **dadurch gekennzeichnet, daß** die zwei dem Hilfsrahmen (111.1) zugeordneten Gelenkpunkte (118.1:119.1) bei geschlossenem Deckelteil (104) in einer in Fahrtrichtung (F) rückwärtigen Extremalstellung gehalten sind.

## Claims

1. A convertible vehicle (1; 101) with a roof (2; 102) storable beneath a cover element (4; 104) in the rear part of the vehicle (3; 103), wherein the cover element (4; 104) can be moved up and down in order to release a through opening (7; 107) adjacent to its front end region (4a; 115) for the roof (2; 102) on the one hand, and in order to release a receiving opening (8; 108) adjacent to its rear end region (9; 109) for luggage, wherein an auxiliary frame (11; 111; 111.1) is arranged beneath the cover element (4; 104) which is connected In its region arranged in front in the direction of travel (F) by a multiple joint (14; 114; 114.1) to the cover element (4; 104) and is mounted movably in its rear region (12; 112; 112.1) opposite the vehicle body, and wherein the multiple joint (14; 114; 114.1), when the through opening (7; 107) for the roof (2; 102) is released, is retained in an installed position increasing the distance between the cover element (4; 104) and the auxiliary frame (11; 111; 111.1) opposite the closed position, **characterised in that** the multiple joint (14; 114; 114.1) exhibits hinge points (21, 22, 25, 26; 118, 119; 118.1, 119.1) located on a coupling body (17; 113; 113.1), and **in that** the hinge points (21, 22, 25, 26; 118, 119; 118.1, 119.1) can be displaced opposite the auxiliary frame (11; 111; 111.1) when the roof is opened.

2. The convertible vehicle according to claim 1, **characterised in that** the multiple joint (14) comprises at least two coupled partial joints (15; 16), one of which (15) is mounted on the cover element (4) and one (16) on the auxiliary frame.

3. The convertible vehicle according to claim 1, **characterised in that** the partial joints (15; 16) are connected to each other by a rigid coupling body (17) which, in the open position of the cover element (4), is freely movable outside its connection to the partial joints (15; 16) for releasing the through opening (7) for the roof (2).

4. The convertible vehicle according to one of claims 1 to 3, **characterised in that** the partial joints (15; 16) each comprise a plurality of guides (23, 24; 29, 30) pivotably connected to the coupling body (17).

5. The convertible vehicle according to one of claims 3 to 4. **characterised in that** the partial joints (15: 16) each comprise two hinge points (21, 22; 25. 26) mounted on the coupling body (17),

6. The convertible vehicle according to one of claims 3 to 5, **characterised in that** the partial joint (15) assigned to the cover element (4) exhibits two hinge points (19; 20) mounted on the cover element (4) and **in that** the partial joint (18) assigned to the auxiliary frame (11) exhibits two hinge points (27; 28) mounted on the auxiliary frame (11).

7. The convertible vehicle according to one of claims 1 to 6, **characterised in that** the partial joint (16) connected to the auxiliary frame (11) effects an installation of the guides (23; 24) of the partial joint (15) connected to the cover element (4) by a movement of the auxiliary frame (11) and coupling to the coupling body (17).

8. The convertible vehicle according to claim 1, **characterised in that** the multiple joint (114; 114.1) is a four-part joint, wherein two hinge points (116, 117 ; 116.1, 117.1 ) are assigned to the cover element (104), and two further hinge points (118, 119; 118.1, 119.1) are assigned to the auxiliary frame (11; 11.1).

9. The convertible vehicle according to one of claims 1 or 8, **characterised in that** the hinge point(s) (118, 119; 118.1, 119.1) assigned to the auxiliary frame (111; 111.1) are retained so that they can be displaced opposite the frame.

10. The convertible vehicle according to claim 9, **characterised in that** the displaceability is inhibited when the cover element (104) is opened to release the receiving opening (108) for luggage.

11. The convertible vehicle according to one of claims 1 or one of claims 8 to 10, **characterised in that** at least one slot serving as a guide slot (123; 124; 123.1) is provided for displacing the hinge points (118, 119; 118.1, 119.1) assigned to the auxiliary frame (111; 111.1).

12. The convertible vehicle according to one of claims 1 or one of claims 8 to 11, **characterised in that** two hinge points (118; 119) are retained in the auxiliary frame (111) in two slots (123; 124) extending essentially rectilinearly and, in the closed position, in the direction of travel.

13. The convertible vehicle according to claim 12, **characterised in that** the hinge points (118; 119) are retained in the slots (123; 124) in a front extreme position in the closed position of the cover element (104), are initially displaceable Into a rear direction during opening of the cover element (104) to release the through opening (107) for the roof, and are in turn displaceable in the direction of the front extreme region during further opening.

14. The convertible vehicle according to claim 1 or one of claims 8 to 11, **characterised in that** the joint (114.1) is a four-part joint and **in that** two of the hinge points (118.1; 119.1) are assigned to the cover element (104) and two further points to the auxiliary frame (111.1), wherein the hinge points (118.1; 119.1) assigned to the auxiliary frame (111.1) are displaceable in a common guide slot (123.1).

15. The convertible vehicle according to claim 14, **characterised in that** the guide slot (123.1) is curved upwards.

16. The convertible vehicle according to claims 13 or 14, **characterised in that** the two hinge points (118.1; 119.1) assigned to the auxiliary frame (111.1) are retained in a rear extreme position in the direction of travel (F) when the cover element (104) is closed.

## Revendications

1. Véhicule convertible (1 ; 101) avec une capote (2 ; 102) escamotable dans une zone arrière du véhicule (3 ; 103) en dessous d'un élément de couvercle (4 ; 104), moyennant quoi l'élément de couvercle (4 ; 104) peut être déplacé afin de s'ouvrir et de se fermer d'une part pour libérer une ouverture de passage (7 ; 107) adjacente à sa zone d'extrémité avant (4a ; 115) pour la capote (2 ; 102), et d'autre part afin de libérer une ouverture de réception (8 ; 108) adjacente à sa zone d'extrémité arrière (9 ; 109) pour des bagages, et moyennant quoi un châssis auxiliaire (11 ; 111 ; 111.1) est disposé en dessous de l'élément de couvercle (4 ; 104), lequel châssis auxiliaire est relié, dans sa zone située en amont dans le sens de la marche (F), par l'intermédiaire d'une articulation multiple (14 ; 114 ; 114.1) à l'élément de couvercle (4 ; 104) et est disposé de manière à pouvoir se déplacer par rapport à la carrosserie du véhicule dans sa zone arrière (12 ; 112 ; 112.1), et moyennant quoi l'articulation multiple (14 ; 114 ; 114.1), lors de la libération de l'ouverture de passage (7 ; 107) pour la capote (2 ; 102), est maintenue dans une position redressée, augmentant la distance entre l'élément de couvercle (4 ; 104) et le châssis auxiliaire (11 ; 111 ; 111.1) par rapport à la position fermée, **caractérisé en ce que** l'articulation multiple (14 ; 114 ; 114.1) présente des points d'articulation (21, 22, 25, 26 ; 118, 119 ; 118.1, 119.1) disposés sur un corps d'accouplement (17 ; 113 ; 113.1), et **en ce que** les points d'articulation (21, 22, 25, 26 ; 118, 119 ; 118.1, 119.1) peuvent être déplacés par rapport au châssis auxiliaire (11 ; 111 ; 111.1) lors de l'ouverture de la capote, par l'intermédiaire du corps d'accouplement (17;113;113.1).

2. Véhicule convertible selon la revendication 1, **caractérisé en ce que** l'articulation multiple (14) comporte au moins deux articulations partielles (15 ; 16) accouplées, l'une d'entre elles (15) étant disposée sur l'élément de couvercle (4) et l'autre (16) sur le châssis auxiliaire (11).

3. Véhicule convertible selon la revendication 2, **caractérisé en ce que** les articulations partielles (15 ; 16) sont reliées l'une à l'autre par l'intermédiaire d'un corps d'accouplement (17) rigide qui, dans la position ouverte de l'élément de couvercle (4), peut se déplacer librement en dehors de sa liaison avec les articulations partielles (15 ; 16) afin de libérer l'ouverture de passage (7) pour la capote (2).

4. Véhicule convertible selon l'une quelconque des revendications 1 à 3, **caractérisé en ce que** les articulations partielles (15; 16) comportent respectivement plusieurs bras oscillants transversaux (23, 24; 29, 30) reliés de manière pivotante au corps d'accouplement (17).

5. Véhicule convertible selon l'une quelconque des revendications 3 à 4, **caractérisé ce que** les articulations partielles (15 ; 16) comportent respectivement deux points d'articulation (21, 22 ; 25, 26) disposés sur le corps d'accouplement (17).

6. Véhicule convertible selon l'une quelconque des revendications 3 à 5, **caractérisé en ce que** l'articulation partielle (15) affectée à l'élément de couvercle (4) présente deux points d'articulation (19 ; 20) disposés sur l'élément de couvercle (4), et l'élément d'articulation (16) affecté au châssis auxiliaire (11) présente deux points d'articulation (27 ; 28) disposés sur le châssis auxiliaire (11).

7. Véhicule convertible selon l'une quelconque des revendications 1 à 6, **caractérisé en ce que** l'articulation partielle (16) reliée au châssis auxiliaire (11) provoque, par l'intermédiaire d'un déplacement du châssis auxiliaire (11) et d'un accouplement avec le corps d'accouplement (17), une mise en place des bras oscillants transversaux (23 ; 24) de l'articulation partielle (15) reliée à l'élément de couvercle (4).

8. Véhicule convertible selon la revendication 1, **caractérisé en ce que** l'articulation multiple (114 ; 114.1) est une articulation quadruple, moyennant quoi deux points d'articulation (116, 117 ; 116.1, 117.1) sont affectés à l'élément de couvercle (104) et deux autres points d'articulation (118, 119 ; 118.1, 119.1) sont affectés au châssis auxiliaire (111 ; 111.1).

9. Véhicule convertible selon l'une quelconque des revendications 1 ou 8, **caractérisé en ce que** le ou les points d'articulation (118, 119 ; 118.1, 119.1) affectés au châssis auxiliaire (111 ; 111.1) sont maintenus en pouvant se déplacer par rapport à celui-ci.

10. Véhicule convertible selon la revendication 9, **caractérisé en ce que** la possibilité de déplacement lors de l'ouverture de l'élément de couvercle (104) afin de libérer l'ouverture de réception (108) pour les bagages est entravée.

11. Véhicule convertible selon la revendication 1 ou l'une quelconque des revendications 8 à 10, **caractérisé en ce que**, afin de déplacer le ou les points d'articulation (118, 119 ; 118.1, 119.1) affectés au châssis auxiliaire (111 ; 111.1), au moins un trou oblong servant de coulisse de guidage (123 ; 124 ; 123.1) est prévu.

12. Véhicule convertible selon la revendication 1 ou l'une quelconque des revendications 8 à 11, **caractérisé en ce que** deux points d'articulation (118; 119) sont maintenus dans le châssis auxiliaire (111) dans deux trous oblongs (123; 124) s'étendant sensiblement en ligne droite et s'étendant dans le sens de la marche dans la position fermée.

13. Véhicule convertible selon la revendication 12, **caractérisé en ce que**, dans la position fermée de l'élément de couvercle (104), les points d'articulation (118 ; 119) sont maintenus dans les trous oblongs (123 ; 124) dans une position extrême avant, tandis que l'ouverture de l'élément de couvercle (104) peut tout d'abord être déplacée dans un sens allant vers l'arrière afin de libérer l'ouverture de passage (107) pour la capote et, lors d'une ouverture supplémentaire, peut être de nouveau déplacée dans le sens de la zone extrême avant.

14. Véhicule convertible selon la revendication 1 ou selon l'une quelconque des revendications 8 à 11, **caractérisé en ce que** l'articulation (114.1) est une articulation quadruple et deux des points d'articulation (118.1 ; 119.1) sont affectés à l'élément de couvercle (104) et deux autres sont affectés au châssis auxiliaire (111.1), moyennant quoi les points d'articulation (118.1 ; 119.1) affectés au châssis auxiliaire (111.1) peuvent se déplacer dans une coulisse de guidage commune (123.1).

15. Véhicule convertible selon la revendication 14, **caractérisé en ce que** la coulisse de guidage (123.1) est courbée vers le haut.

16. Véhicule convertible selon l'une quelconque des revendications 13 ou 14, **caractérisé en ce que** les deux points d'articulation (118.1 ; 119.1) affectés au châssis auxiliaire (111.1), lorsque l'élément de couvercle (104) est fermé, sont maintenus dans une position extrême vers l'arrière dans le sens de la marche (F).
